# EUROPEAN PATENT APPLICATION

(11) **EP 4 064 027 A1**
(43) Date of publication of application: **28.09.2022**
(21) Application number: 22157886.7
(22) Date of filing: 22.02.2022
(51) Int. Cl.: G06F 3/12, H04N 1/00

(54) **INFORMATION PROCESSING APPARATUS, INFORMATION PROCESSING SYSTEM, INFORMATION PROCESSING METHOD, AND CARRIER MEANS**

(30) Priority: 22.03.2021 JP 2021047766
(71) Applicant: Ricoh Company, Ltd., Tokyo 143-8555 (JP)
(72) Inventor: ISHII, Nanami, Tokyo, 143-8555 (JP)
(74) Representative: Marks & Clerk LLP

(57) **Abstract**

An information processing apparatus, an information processing system, an information processing method, and a carrier means. The information processing apparatus (10) acquires first information related to the device (20) for displaying a screen for receiving an application execution instruction, determines whether an application is executable according to a type of device (20) that the application execution instruction was received from among a plurality of types of devices (20) classified by function indicated in the first information, and transmits to the device (20), second information for causing the device (20) to display on a display (22), a screen indicating a determination result of whether the application is executable.

## Description

### BACKGROUND

### Technical Field

The present disclosure relates to an information processing apparatus, an information processing system, an information processing method, and a carrier means.

### Related Art

A device that displays a screen for receiving an application execution instruction, such as an application list screen is known. Further, a technique for improving convenience of such a screen has been devised.

For example, in Japanese Unexamined Patent Application Publication No.2012-248102, a technique for facilitating a user to understand whether the application of an icon displayed on the application list screen is activated is disclosed.

However, a license, for example, for an application provided through a network by a cloud service or a server may be granted on a user-by-user basis rather than on a device-by-device basis. In this case, the user may try to execute the application from a plurality of types of devices. In this case, not all types of devices are able to execute the application. For example, when it is necessary to have a certain function (for example, a print function) in order to execute the application, the application cannot be executed on a device that does not have the function.

### SUMMARY

Embodiments of the present disclosure describe an information processing apparatus, an information processing system, an information processing method, and a carrier means. The information processing apparatus acquires first information related to the device for displaying a screen for receiving an application execution instruction, determines whether an application is executable according to a type of device that the application execution instruction was received from among a plurality of types of devices classified by function indicated in the first information, and transmits to the device, second information for causing the device to display on a display, a screen indicating a determination result of whether the application is executable.

The present disclosure describes the information processing apparatus, the information processing system, the information processing method, and the carrier mean, each of which enables the user to be aware of the applications that is executable by the device.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of a configuration of an information processing system according to a first embodiment;
FIG. 2 is a block diagram illustrating a hardware configuration of the information processing apparatus according to the first embodiment;
FIG. 3 is a block diagram illustrating an example of a hardware configuration of a device according to the first embodiment;
FIG. 4 is a block diagram illustrating an example of a functional configuration of the information processing apparatus and the device according to the first embodiment;
FIG. 5 is a sequence diagram illustrating an example of a process executed by the information processing system;
FIG. 6 is a table illustrating an example of device type information;
FIG. 7 is a diagram illustrating an example of an application list screen;
FIG. 8 is a diagram illustrating an example of a warning screen;
FIG. 9 is a flowchart illustrating an example of a process of generating the application list screen;
FIG. 10 is a diagram illustrating a first example of application information;
FIG. 11 is a diagram illustrating an example of a workflow defined in the application information;
FIG. 12 is a diagram illustrating a second example of the application information;
FIG. 13 is a table illustrating an example of restriction information according to the first embodiment;
FIG. 14 is a table illustrating an example of a message table;
FIG. 15 is a table illustrating a first example of the restriction information according to a second embodiment; and
FIG. 16 is a table illustrating a second example of the restriction information according to the second embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a first embodiment is described with reference to the drawings.

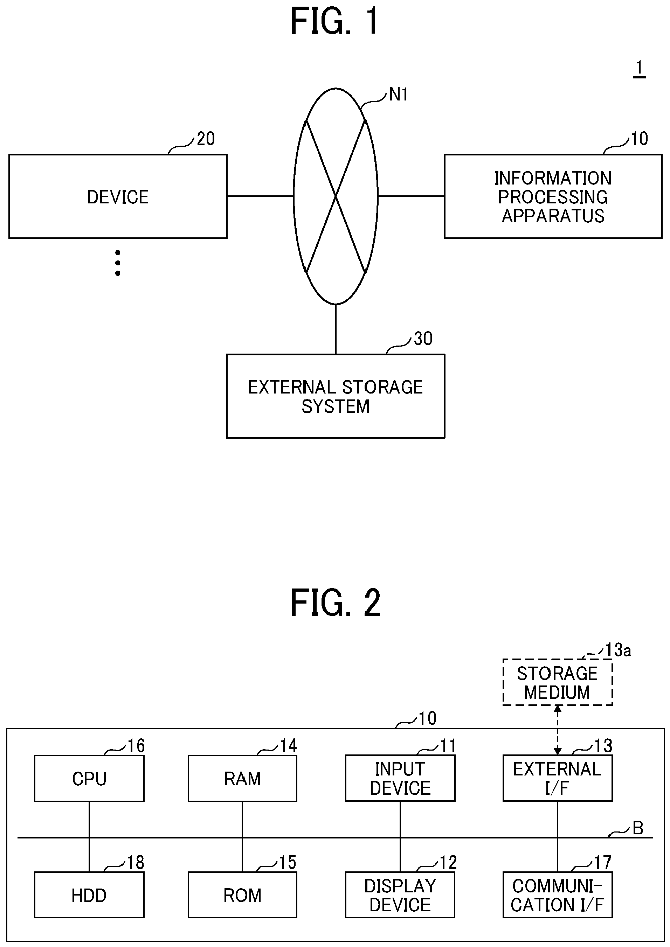

FIG. 1 is a diagram illustrating an example of a configuration of an information processing system 1 according to the first embodiment. The information processing system 1 illustrated in FIG. 1 includes an information processing apparatus 10, one or more devices 20, an external storage system 30, and the like as components. The device 20 and the external storage system 30 and the like are connected to the information processing apparatus 10 through a wide area network N1 such as the internet. Further, the device 20 is connected to the external storage system 30 through the network N1.

The information processing apparatus 10 is one or more computers that provide various applications that implement a series of processes (hereinafter, referred to as "workflow") in which one or more of the plurality of processes are combined, through the network N1.

Here, the process is a process related to an electronic file such as a document file or an image file. For example, print, scan, facsimile transmission, data format conversion, mail delivery, optical character recognition (OCR) process, data processing, compression and decompression, storage in a repository, etc. are examples of process.

The device 20 is an electronic device that displays a screen for receiving from a user, an execution instruction of the application provided by the information processing apparatus 10. For example, an image forming apparatus such as a multifunction peripheral (MFP), a personal computer (PC), a smartphone, a tablet terminal, a projector, an electronic whiteboard, a digital camera and the like are examples of the device 20. The user can use various applications provided by the information processing apparatus 10 by using the device 20. In the present embodiment, a case where the device 20 is the image forming apparatus is described.

The external storage system 30 is one or more storage devices that provide a cloud storage. In the present embodiment, the external storage system 30 is a candidate for a storage destination of data generated by the application in the information processing apparatus 10.

FIG. 2 is a block diagram illustrating a hardware configuration of the information processing apparatus 10 according to the first embodiment. The information processing apparatus 10 illustrated in FIG. 2 includes an input device 11, a display device 12, an external interface (I/F) 13, and a random access memory (RAM) 14. Further, the information processing apparatus 10 includes a read only memory (ROM) 15, a central processing unit (CPU) 16, a communication I/F 17, and a hard disk drive (HDD) 18. These hardware devices are connected to one another through a bus B.

The input device 11 includes a keyboard, a mouse, a touch panel, and the like to enable the user to input various operation signals. The display device 12 includes a display and the like and displays the processing result produced by the information processing apparatus 10. Note that at least one of the input device 11 and the display device 12 may be connected to the information processing apparatus 10 for use when necessary.

The communication I/F 17 is an interface device to connect the information processing apparatus 10 to the network N1. The information processing apparatus 10 performs communication through the communication I/F 17.

The HDD 18 is a nonvolatile storage device that stores programs or data. Examples of the software or data stored in the HDD 18 include an operating system (OS) for controlling an entire operation of the information processing apparatus 10 and an application program providing various functions on the OS.

The information processing apparatus 10 may use a drive device (for example, a solid state drive (SSD)) that uses a flash memory as a storage medium instead of the HDD 18. Further, the HDD 18 manages the stored programs and data by a predetermined file system and/or predetermined database (DB).

The external I/F 13 is an interface with an external device. Examples of the external device include a storage medium 13a. Accordingly, the information processing apparatus 10 can read from and write to the storage medium 13a through the external I/F 13. Examples of the storage medium 13a include a flexible disc, a Compact Disc (CD), a Digital Versatile Disc (DVD), a Secure Digital (SD) memory card, and a Universal Serial Bus (USB) memory.

The ROM 15 is a nonvolatile semiconductor memory that can hold programs and data even when the power is turned off. The ROM 15 stores programs and data such as Basic Input/Output System (BIOS), OS settings, network settings, and the like, which are executed at the time of activation of the information processing apparatus 10. The RAM 14 is a volatile semiconductor memory that temporarily stores programs and data.

The CPU 16 reads programs or data from a storage device such as the ROM 15 and the HDD 18 onto the RAM 14 and executes processing to implement entire control and functions of the information processing apparatus 10.

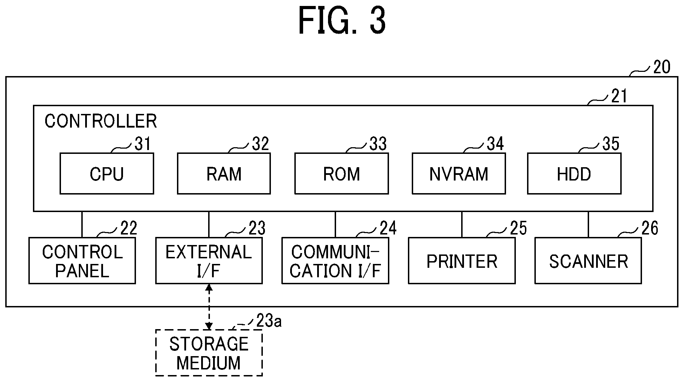

FIG. 3 is a block diagram illustrating an example of a hardware configuration of the device 20 according to the present embodiment. The device 20 illustrated in FIG. 3 includes a controller 21, a control panel 22, an external I/F 23, a communication I/F 24, a printer 25, and a scanner 26. Further, the controller 21 includes a CPU 31, a RAM 32, a ROM 33, a nonvolatile random access memory (NVRAM) 34, and an HDD 35.

The ROM 33 is a nonvolatile semiconductor memory that stores various programs or data. The RAM 32 is a volatile semiconductor memory, which holds programs or data temporarily. The NVRAM 34 stores, for example, setting information and the like. The HDD 35 is a nonvolatile storage device that stores various programs or data.

The CPU 31 is an arithmetic unit that implements control and functions of the entire device 20 by reading programs, data, setting information, and the like from the ROM 33, NVRAM 34, HDD 35, and the like onto the RAM 32 and executing processing.

The control panel 22 includes an input unit that receives a user input, and a display unit that displays various information. The external I/F 23 is an interface with an external device. An example of the external device is a storage medium 23a. Accordingly, the device 20 can read from and write to the storage medium 23a through the external I/F 23. Examples of the storage medium 23a include an integrated circuit (IC) card, a flexible disc, a CD, a DVD, a SD memory card, and a USB memory.

The communication I/F 24 is an interface for connecting the device 20 to the network. The device 20 performs communication through the communication I/F 24. The printer 25 is a printing device that prints print data. The scanner 26 is a scanning device that reads a document and generates an electronic file (image file).

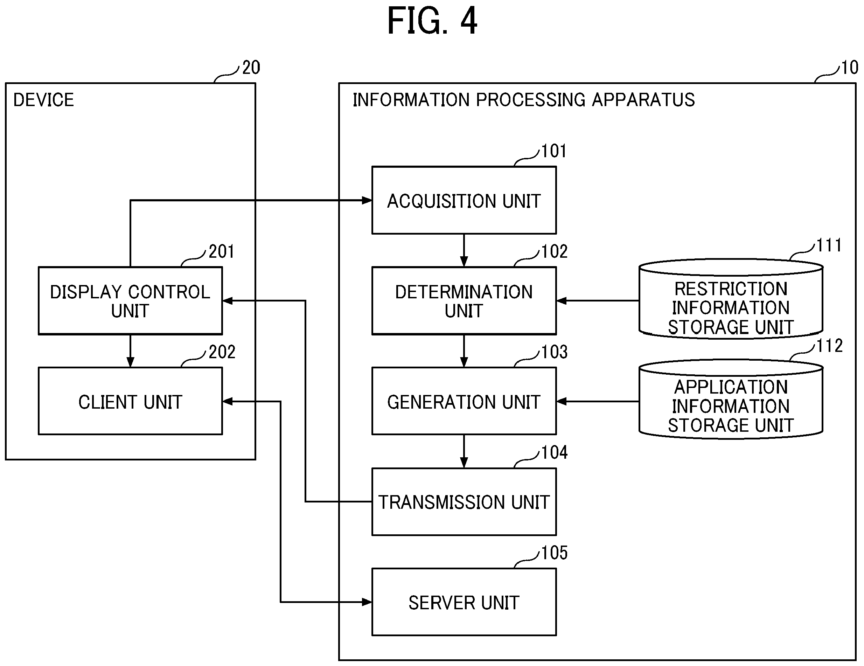

FIG. 4 is a block diagram illustrating an example of a functional configuration of the information processing apparatus 10 and the device 20 according to the first embodiment. In FIG. 4, the information processing apparatus 10 includes an acquisition unit 101, a determination unit 102, a generation unit 103, a transmission unit 104, and a server unit 105. Each of these units is implemented by a process executed by the CPU 16 according to one or more programs installed in the information processing apparatus 10. The information processing apparatus 10 also includes a restriction information storage unit 111 and an application information storage unit 112. Each of these units is implemented by using, for example, the HDD 18 or a storage device that can be connected to the information processing apparatus 10 through the network.

The acquisition unit 101 receives a generation request of an application list screen from the device 20. The acquisition unit 101 acquires device type information from the device 20 (hereinafter referred to as a "target device 20") that is a source of the generation request. The device type information is information indicating a classification or type of devices including the same function (hereinafter referred to as "device type") such as the MFP includes the print function and the scan function, the PC and the smartphone does not include the print function and the scan function but includes a display, and the electronic whiteboard does not include the print function and the scan function but includes a large display. In other words, the device type information is information indicating which type each device 20 belongs to when the device 20 is classified into a plurality of types according to the function of the device 20. The application list screen is an example of a screen for receiving from a user, the execution instruction of application provided by the information processing apparatus 10. For example, the application list screen is a screen that includes each application provided by the information processing apparatus 10 as an option.

The determination unit 102 determines whether each application that is a candidate of the application to be displayed on the application list screen is executable on the target device 20 based on the device type information acquired by the acquisition unit 101 and information stored in the restriction information storage unit 111 (hereinafter referred to as "restriction information"). The application is determined not executable not only when the application cannot be executed actually on the target device 20 but may also include when an application creator does not allow the target device 20 of a specific device type to execute the application for some reason.

The restriction information storage unit 111 stores common information for restricting the executable devices 20 for the candidate application for displaying on the application list screen. Specifically, the restriction information storage unit 111 stores restricted application information for identifying an application subject to restriction, and the device type information indicating the device type that can execute the application or cannot execute the application. The candidate application for display on the application list screen can be identified by referring to the application information storage unit 112.

The application information storage unit 112 stores in advance the application information of each of one or more applications that are display candidates of the application list screen. The application information refers to information including application identification information, application workflow definition, and the like.

The generation unit 103 generates screen data of the application list screen. The generation unit 103 generates the screen data so as to include information for causing the target device 20 to display the application list screen according to the determination result by the determination unit 102. For example, the generation unit 103 includes in the screen data, information for preventing execution of the application that is determined to be not executable. The screen data refers to data including a definition for causing the device 20 to display the application list screen. For example, format of the screen data may be Hypertext Markup Language (HTML) format or another format.

The transmission unit 104 transmits the screen data generated by the generation unit 103 to the target device 20.

The server unit 105 controls the execution of the application based on the application information of the application selected on the application list screen displayed by the target device 20 based on the screen data transmitted by the transmission unit 104.

As illustrated in FIG. 4, the device 20 includes a display control unit 201, a client unit 202, and the like. Each of these units is implemented by a process executed by the CPU 31 of the device 20 according to one or more programs installed in the device 20.

The display control unit 201 is, for example, a browser. In the present embodiment, the display control unit 201 transmits the generation request for generating the application list screen to the information processing apparatus 10 in response to an instruction from the user. The generation request includes the device type information of the device 20 from which the generation request is transmitted. The display control unit 201 also receives from the information processing apparatus 10, the screen data of the application list screen generated by the information processing apparatus 10 in response to the generation request. The display control unit 201 displays the application list screen based on the screen data.

The client unit 202 transmits an execution request of the application selected by the user to the information processing apparatus 10 through the application list screen. The client unit 202 also controls a process to be executed on the device 20 with respect to the application.

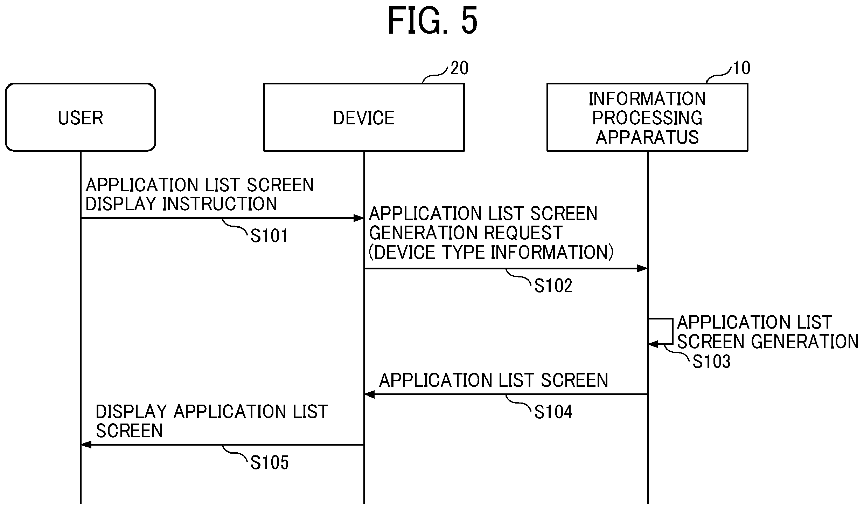

Hereinafter, the process executed by the information processing system 1 is described. FIG. 5 is a sequence diagram illustrating an example of the process executed by the information processing system 1.

In step S101, the display control unit 201 of the target device 20 receives a display instruction for displaying the application list screen from the user. The display instruction may be, for example, selection of an icon or the like on a screen already displayed by the display control unit 201.

In step S102, the display control unit 201 transmits the generation request for the application list screen to the information processing apparatus 10. The display control unit 201 includes the device type information of the target device 20 in the generation request. For example, when the generation request is transmitted using Hypertext Transfer Protocol (HTTP), the display control unit 201 may include the device type information in a query of a Uniform Resource Locator (URL) corresponding to the generation request.

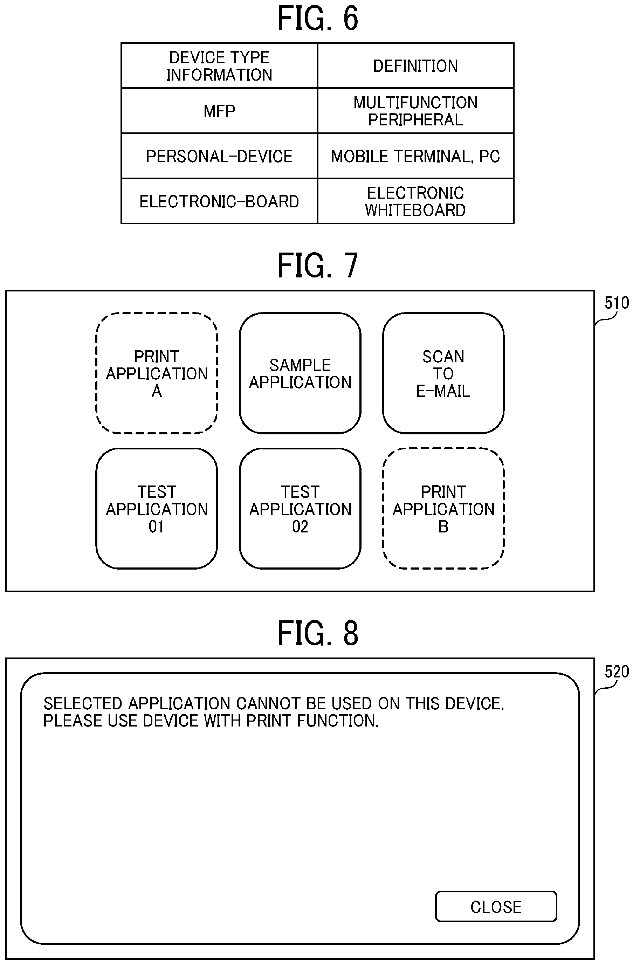

FIG. 6 is a table illustrating an example of the device type information. In the present embodiment, the device type information is a value of any one of "MFP", "PERSONAL-DEVICE" or "ELECTRONIC-BOARD" as illustrated in FIG. 6. Other information indicating a classification or type of the devices with the same function other than the information illustrated may be included in the device type information. The "MFP" indicates the multifunction peripheral. The "MFP" indicates the classification or type of a device including the same function such as the print function and the scan function. The "PERSONAL-DEVICE" indicates the classification or type of a device that does not include the print function and the scan function but includes the same function such as the display. The "ELECTRONIC-BOARD" indicates the classification or type of a device including the same function, such as the large display, but does not include the print function and the scan function. In the case the target device 20 is a mobile terminal, the generation request in step S102 includes "PERSONAL-DEVICE". The device type information may be classified more finely. For example, "MFP" may be classified into "print", "scan" and the like. In this case, when the target device 20 is a multifunction peripheral, the generation request in step S102 includes "print" and "scan" as device type information.

In response to receiving the generation request of the application list screen by the acquisition unit 101 of the information processing apparatus 10, the information processing apparatus 10 executes the generation process of the application list screen in step S103. The application list screen generation process is a process of generating screen data (for example, data such as HTML) of the application list screen.

In step S104, the transmission unit 104 transmits the screen data of the application list screen generated in step S103 to the target device 20.

In response to receiving the screen data, the display control unit 201 of the target device 20 displays the application list screen based on the screen data in step S105. In other words, the screen data causes the target device 20 to display the application list screen.

FIG. 7 is a diagram illustrating a display example of the application list screen. As illustrated in FIG. 7, the application list screen 510 includes display component such as an icon or button (hereinafter, collectively referred to as "icon") for each application that is a candidate for execution. Among the icons included in the application list screen 510 of FIG. 7, the icon having a broken line border (hereinafter referred to as "invalidated icon") indicates that the target device 20 cannot execute the application corresponding to the icon. Accordingly, the user can grasp which application can be executed or cannot be executed by referring to the application list screen 510.

In response to the selection of the invalidated icon, the display control unit 201 may ignore the selection or may display a warning screen indicating that the application corresponding to the icon cannot be executed. The screen data may include a definition for causing the display control unit 201 to display the warning screen.

FIG. 8 is a diagram illustrating a display example of the warning screen. As illustrated in FIG. 8, the warning screen 520 includes a message indicating that the selected application cannot be executed. "PLEASE USE DEVICE WITH PRINT FUNCTION" in the message indicates the reason why the application cannot be executed (that is, the device does not include the print function). Accordingly, the user understands the reason why the application cannot be executed by referring to the message.

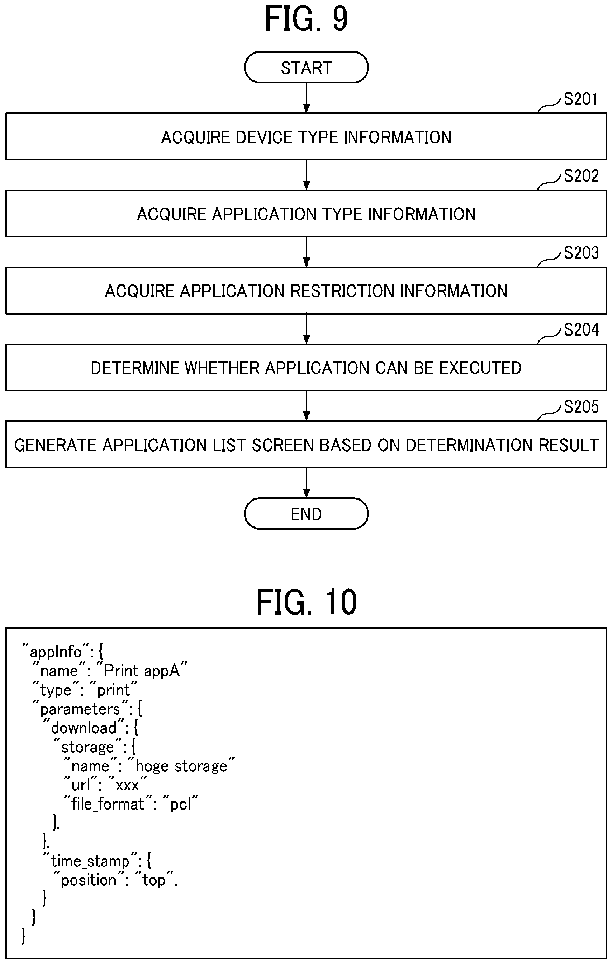

Hereinafter, details of step S103 in FIG. 5 is described. FIG. 9 is a flowchart illustrating an example of a process of generating the application list screen.

In step S201, the acquisition unit 101 acquires device type information from the request received from the target device 20 (request for generating the application list screen 510). For example, when the target device 20 is a PC, the device type information acquired by the acquisition unit 101 is "PERSONAL-DEVICE".

In step S202, the determination unit 102 acquires the application information of each application of the display candidate of the application list screen 510 from the application information storage unit 112. The application information acquired by the determination unit 102 may be all application information stored in the application information storage unit 112 or may be some application information.

FIG. 10 is a diagram illustrating a first example of the application information. As illustrated in FIG. 10, elements included in the application information have a nested structure. In the application information, curly brackets ({ }) indicate hierarchy of the elements.

Each element has a form of "element name: value". The element name is a name of the element. The value is a value of the element.

The highest-level element is applnfo. The value of appInfo is application information. The value of the appInfo element (that is, application information) includes a name element, a type element, and a parameters element as child elements.

The value of the name element is a name unique to each application. The value of the name element may be included in the icon displayed on the application list screen 510, for example.

The value of the type element indicates the type of application. The application type is information that classifies an application group based on a type of workflow executed by the application. In the present embodiment, the application group is classified into either "print" or "scan" application type. In other words, the application type is "print" or "scan" in the present embodiment. An application whose application type is "print" is hereinafter referred to as a "print application". An application whose application type is "scan" is hereinafter referred to as a "scan application".

The print application is an application that executes a series of processes (workflow) such as downloading the data to be printed from the external storage system 30, processing the data, and printing the processed data on the device 20. For example, a plurality of print applications are defined according to the difference in the storage of the download source, the difference in the processing process for the downloaded data, and the like.

The scan application is an application that executes a series of processes (workflow) such as receiving from the device 20, data input by the device 20 by scanning or the like, processes the data, and saving the processed data in the external storage system 30. For example, a plurality of scan applications are defined according to the difference in processing process, the difference in the external storage of the storage destination, and the like.

The parameters element includes child elements whose values are setting information related to the program (hereinafter referred to as "component") that executes the process, in the order of the processes that make up the set of processes performed by the application. That is, in the present embodiment, the application is defined by an ordered combination of one or more components.

The element name of each child element of the parameters element is the identification name of the component. The value of each child element is the setting information for the component. In the example of FIG. 10, the parameters element includes a download element and a time_stamp element.

The download element corresponds to a process of downloading data from the external storage system 30 (a component that executes the process (hereinafter referred to as "download component")). The value of the download element includes a name element, a url element, and a file_format element as the setting information for the download component. The value of the name element indicates the name of the external storage system 30 from which the download is made. The value of the url element indicates the URL of the external storage system 30 of the download source. The value of the file_format element indicates the downloadable file format.

The time_stamp element corresponds to a processing process of assigning a time stamp to data (a component that executes the processing process (hereinafter, referred to as "time stamp component")). The value of the time_stamp element includes a position element as the setting information for the time stamp component. The value of the position element indicates the position to which the time stamp is to be assigned.

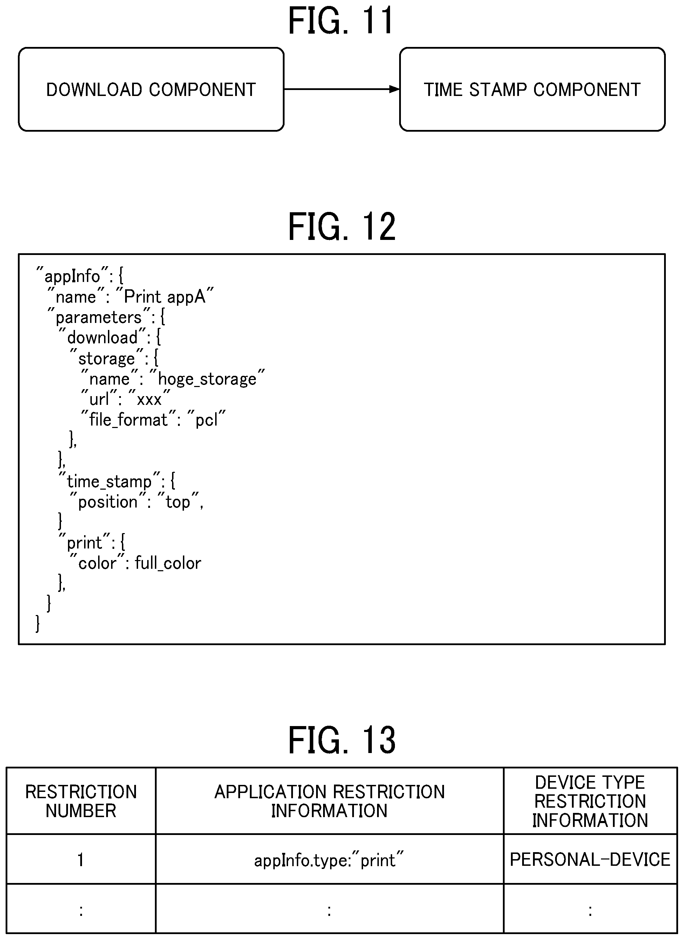

According to the above description, the application information in FIG. 10 indicates the definition of the workflow as illustrated in FIG. 11. FIG. 11 illustrates that the time stamp component gives a time stamp to the data downloaded by the download component.

Note that the workflow definitions illustrated in FIGs. 10 and 11 do not include definitions relating to processing corresponding to downloading of data (with a time stamp) by the device 20 and printing of the data by the device 20. This is because these processes are common processes in various print applications and are implemented in advance in the client unit 202. That is, when the print application is selected as the execution target, the client unit 202 receives the data transmitted from the information processing apparatus 10 and controls the printing of the data. However, the client unit 202 of the device 20 that does not include the print function such as the PC stores the data in the device 20. As described above, the application information does not include the definition regarding the process executed by the device 20 in the workflow. The above description is the same for the application information of the scan application. Specifically, the application information of the scan application does not include the definition relating to the processing corresponding to the input of the data by the device 20 and the transmission of the data to the information processing apparatus 10.

However, as illustrated in FIG. 12, the application information may include a definition regarding the process executed by the device 20. The parameters element of the application information of FIG. 12 includes a print element as the last child element. The print element is an element corresponding to download and printing executed by the device 20. The value of the print element includes setting information regarding printing. For example, in FIG. 12, the value of the print element includes a color element. The value of the color element indicates the color setting at the time of printing.

As described above, in step S202 of FIG. 9, the determination unit 102 acquires the application information of the application for each application that is a display candidate in the application list (hereinafter referred to as "candidate application").

In step S203, the determination unit 102 acquires the restriction information from the restriction information storage unit 111.

FIG. 13 is a table illustrating an example of the restriction information according to the first embodiment. In FIG. 13, one line indicates one piece of restriction information. One piece of restriction information is a combination of a restriction number, the restricted application information, and a restricted device type.

The restriction number is identification information of each restriction information stored in the restriction information storage unit 111.

The restricted application information is information indicating an application having restriction on execution. The restriction information includes a condition for the value of any element in the application information. The execution of application corresponding to the application information that meets the condition is restricted. In the example of FIG. 13, the restricted application information is appInfo.type:"print". This indicates the condition that the value of the type element, which is the child element of the appInfo element, is print. The application that meets this condition is the print application. The restricted device type indicates device type information of the device 20 that cannot execute an application that matches the restricted application information (execution of the application is restricted). According to the above description, the restricted application information in FIG. 13 indicates that the device 20 whose device type information is "PERSONAL-DEVICE" cannot execute the print application. Such restriction information may be used, for example, to limit the execution of the print application on the device 20 that does not have the print function and to prohibit the storage of data downloaded from the information processing apparatus 10. When the application information adopts the format illustrated in FIG. 12, the restricted application information illustrated in FIG. 13 may be "applnfo.parameters.print".

In step S204, the determination unit 102 determines whether each candidate application is executable on the target device 20. Specifically, the determination unit 102 determines that the target device 20 can execute all the candidate applications when there is no restriction information (FIG. 13) including the device type information of the target device 20 as the restricted device type information. In response to a determination that there is one or more pieces of restriction information that include the device type information of the target device 20 as the restricted device type information, the determination unit 102 determines that the candidate application that matches the restricted application information included in the restriction information is an application that the target device 20 cannot execute (hereinafter, referred to as "non-executable application").

Note that FIG. 13 illustrates an example in which information indicating a non-executable application (restricted application information) is associated with the device type information, but information indicating an executable application may be associated with the device type information.

In step S205, the generation unit 103 generates screen data of the application list screen 510 based on the determination result in step S204. The generation unit 103 includes information for causing the target device 20 to display the application list screen 510 based on the determination result in the screen data. For example, the generation unit 103 generates the screen data so that the icon corresponding to the non-executable application is invalidated (inoperable). Alternatively, the generation unit 103 may generate the screen data so as not to include the icon of the non-executable application. Alternatively, the generation unit 103 may generate the screen data so that the target device 20 displays the warning screen 520 as illustrated in FIG. 8 when the icon corresponding to the non-executable application is selected. When displaying the warning screen 520, the generation unit 103 may specify, for example, a message to be included in the warning screen 520 by referring to a message table stored in the HDD 18.

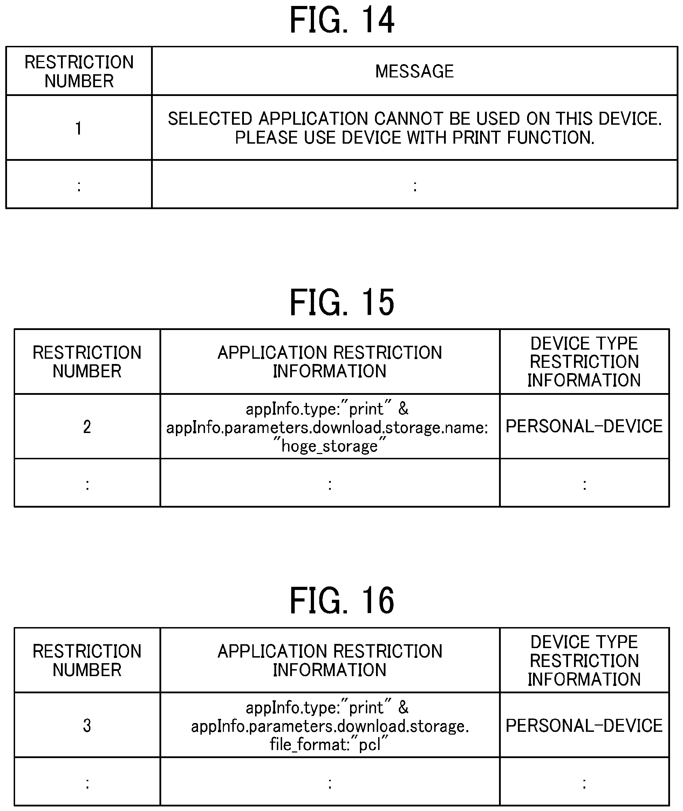

FIG. 14 is a table illustrating an example of the message table. As illustrated in FIG. 14, the message table is a table that stores the restriction number and the message in association with each other. The restriction number corresponds to the restriction number of the restriction information (FIG. 13). The message is a message to be displayed on the warning screen 520 based on a determination that the icon of the application determined to be the non-executable application is selected based on the restriction information corresponding to the restriction number. The generation unit 103 refers to the message table to identify a message corresponding to the restriction number of the restriction information that caused the candidate application to be determined as the non-executable application.

Although the example in which the information processing apparatus 10 includes the determination unit 102 is described above, the determination unit 102 may be included in the device 20. In this case, the generation unit 103 generates the screen data of the application list screen 510 so that all the applications of the display candidates can be executed. The transmission unit 104 transmits the screen data, application information of all applications, and restriction information stored in the restriction information storage unit 111 to the target device 20. The determination unit 102 of the target device 20 determines the executable application based on the application information and the restriction information. The display control unit 201 displays the application list screen 510 based on the determination result by the determination unit 102.

As described above, according to the first embodiment, the screen data of the application list screen 510 is generated so that the executable application and the non-executable application are distinguished based on the function of the device 20 used by the user. Accordingly, the application that can be executed on the application list screen 510 is changed according to the device type. The user is made aware of the executable applications of the device 20. As a result, it is possible to reduce unnecessary operations such as selecting the non-executable application. Further, when the non-executable application is hidden, more executable applications can be displayed on the application list screen 510.

Hereinafter, a description is given of a second embodiment. The differences from the first embodiment is described in the second embodiment. Points that are not particularly mentioned may be the same as described in the first embodiment.

In the first embodiment, the device 20 whose device type information is "PERSONAL-DEVICE" cannot execute all the print applications. The second embodiment describes an example in which the print application that the device 20 cannot execute is limited to a part of the print applications.

For example, suppose that only the data downloaded from a specific external storage system 30 is restricted from being executed by the device 20 whose device type is "PERSONAL-DEVICE". Specifically, it is assumed that there is a contract stating that the data downloaded from the specific external storage system 30 is to be printed. In this case, in order to comply with the contract, for the print application whose data download source is the specific external storage system 30, execution by the device 20 whose device type is "PERSONAL-DEVICE" may be restricted. In this case, the restriction information may be defined as follows.

FIG. 15 is a table illustrating a first example of the restriction information according to the second embodiment. In FIG. 15, the restricted application information is "appInfo.type:"print"& appInfo.parameters.download.store.name:"hoge_store"". In the restricted application information, "&" indicates an AND condition (logical product) of preceding and following conditions. Therefore, the restriction information indicates a condition that the restricted application is the print application and the name of the external storage system 30 from which the download component is downloaded is "hoge_store". In other words, the restricted application information indicates that the application whose execution by the device 20 is restricted is the print application with the name of the external storage system 30 from which the download component is downloaded is "hoge_store".

In this case, the determination unit 102 determines that the application whose name of the external storage system 30 of the download source of the download component is "hoge_store" is the non-executable application among the print applications.

Further, restriction information as illustrated in FIG. 16 may be defined. FIG. 16 is a table illustrating a second example of the restriction information according to the second embodiment. In FIG. 16, the restricted application information is "appInfo.type:"print"& appInfo.parameters.download.storage.file_format:"pcl"". The restriction information indicates a condition that the application is the print application and the downloadable file format of the download component is "pcl". Note that "pcl" indicates Printer Control Language (PCL) data. Here, it is assumed that the PCL data cannot be used (displayed, etc.) in the device 20 whose device type information is "PERSONAL-DEVICE". In this case, by defining the restriction information of FIG. 16, it is possible to avoid execution of a process such that data in an unusable file format is downloaded to the device 20.

In this way, by associating the target of the restriction not with the type of application but with the components (setting information) included in the application, the determination unit 102 determines whether the application is executable with further detail (that is, in component units). The examples of the component include the component that saves in the external storage, the component that performs OCR, a component that converts a file format, and the like. As illustrated in FIGs. 15 and 16, the components subject for restricting execution can be specified.

The device 20 is not limited to the image forming apparatus as long as the device includes a communication function. The information processing apparatus 10 includes, for example, an output device such as a projector (PJ), an interactive whiteboard (a whiteboard having an electronic whiteboard function capable of mutual communication (IWB)), a digital signage, a head up display (HUD) device, an industrial machine, an imaging device, a sound collecting device, a medical device, a network home appliance, an automobile (connected car), a notebook PC, a mobile phone, a smartphone, a tablet terminal, a game console, a personal digital assistant (PDA), a digital camera, a wearable PC or a desktop PC.

The apparatuses or devices described in one or more embodiments are just one example of plural computing environments that implement the one or more embodiments disclosed herein.

In some embodiments, the information processing apparatus 10 includes multiple computing devices, such as a server cluster. The plurality of computing devices is configured to communicate with one another through any type of communication link, including a network, shared memory, etc., and perform the processes disclosed herein. Similarly, the device 20 may include multiple computing devices configured to communicate with one another.

In each of the above embodiments, the device type information is an example of first information. The restriction information is an example of third information. The screen data is an example of second information.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (10) comprising:
an acquisition unit (101) for acquiring first information related to the device (20) for displaying a screen for receiving an application execution instruction;
a determination unit (102) for determining whether an application is executable according to a type of device (20) from which the application execution instruction was received, among a plurality of types of devices (20) classified by function indicated in the first information; and
a transmission unit (104) for transmitting to the device (20), second information for causing the device (20) to display on a display (22) a screen indicating a determination result of whether the application is executable.

2. The information processing apparatus (10) of claim 1, wherein
the first information indicates the type of device (20) classified by function, and the determination unit (102) determines whether the application is executable based on the first information and third information indicating a type of function that enables the execution of the application or the type of function that disables the execution of the application.

3. The information processing apparatus (10) of claim 2, wherein
the application is classified into one of a plurality of types based on a process defined for the application and the third information is information related to the type of the application.

4. The information processing apparatus (10) of any one of claims 2 and 3, wherein the application is defined by an ordered combination of one or more programs, and the third information is information related to the program.

5. The information processing apparatus (10) of claim 4, wherein
the third information indicates a type of the program.

6. An information processing system (1) comprising:
a device (20) for displaying on a display (22), a screen for receiving an application execution instruction; and
the information processing apparatus (10) of claim 1.

7. An information processing method executed by an information processing apparatus (10), the method comprising:
acquiring (S105) first information related to a device (20) for displaying a screen that receives an application execution instruction;
determining (S204) whether an application is executable according to a type of device (20) from which the application execution instruction was received, among a plurality of types of devices (20) classified by function indicated in the first information; and
transmitting (S205) to the device (20), second information for causing the device (20) to display on a display (22) a screen indicating a determination result of whether the application is executable.

8. A carrier means carrying computer readable code for controlling a computer system to carry out the information processing method of claim 7.
